# EUROPÄISCHE PATENTSCHRIFT

(11) **EP 2 364 803 B1**
(45) Veröffentlichungstag und Bekanntmachung des Hinweises auf die Patenterteilung: **31.12.2014**
(21) Anmeldenummer: 11001936.1
(22) Anmeldetag: 09.03.2011
(51) Int. Cl.: B23C 5/20

(54) **Schneideplatte für einen Fingerfräser**
Cutting plate for an end mill
Plaquette de coupe pour une fraise en bout

(30) Priorität: 11.03.2010 DE 102010011031
(43) Veröffentlichungstag der Anmeldung: 14.09.2011
(73) Patentinhaber: DEPO GmbH & Co. KG, 33428 Marienfeld (DE)
(72) Erfinder: Deitert, Heinz, 33442 Herzebrock-Clarholz (DE); Schlemmer, Armin, 33378 Rheda-Wiedenbrück (DE)
(74) Vertreter: Schober, Mirko

(56) Entgegenhaltungen:
- EP-A1- 0 574 376
- DE-B4- 10 338 784
- US-A- 5 447 396
- US-A1- 2005 147 475
- US-B1- 6 413 023

## Beschreibung

Die Erfindung betrifft eine Schneidplatte für einen Fingerfräser gemäß dem Oberbegriff des Anspruchs 1.

Solche Schneidplatten sind aus dem Stand der Technik bekannt. Sie werden an einem Werkzeughalter lösbar befestigt, können somit ausgetauscht werden und sind häufig auch wendbar, so dass eine Schneidplatte mehrere Bereiche identischer Geometrie aufweist, die nacheinander bis zu deren jeweiliger Abnutzung zum Einsatz gebracht werden können. Unterschiedliche Schneidplatten unterscheiden sich dabei häufig in ihrer Geometrie, die dabei den spezifischen Anforderungen des durchzuführenden Fräsvorgangs angepasst wird. Hierbei wird die Geometrie der Schneidkante beispielsweise im Hinblick auf die Erzielung hoher Vorschubgeschwindigkeiten oder hochwertiger Oberflächenqualitäten optimiert. Die Folge ist jedoch, dass häufig zwischen einzelnen Bearbeitungsschritten ein Werkzeugwechsel durchgeführt werden muss, wenn Arbeitsgänge mit unterschiedlichen Werkzeuganforderungen aufeinander folgen.

Da sich die Werkzeugwechselzeiten negativ auf die Produktivität des Fräsprozesses auswirken, wurden bereits in der Vergangenheit Schneidplatten entwickelt, deren Schneidkanten so gestaltet sind, dass sie Zonen unterschiedlicher Schneideigenschaften aufweisen. Eine derartige Schneidplatte ist beispielsweise in der US 6,413,023 B1 offenbart. Bei dieser Schneidplatte sind zwei Schneidkantenbereiche, welche unterschiedliche Schneideigenschaften aufweisen, derart angeordnet, dass sie, durch die Änderung des Anstellwinkels, wahlweise am Werkstück in Eingriff gebracht werden können. Diese Geometrie ermöglicht zwar durch die Wahl eines Einstellwinkels die Schrupp- und die Schlichtbearbeitung ohne einen Werkzeugwechsel hintereinander durchzuführen, jedoch beeinträchtigt diese Gestaltung der Schneidkanten die Einsetzbarkeit der geraden, am Umfang des Werkzeugs angeordneten Schneidkante.

Aus der DE 103 38 784 B4 ist eine Schneidplatte bekannt, deren Geometrie auf der Grundform eines Parallelogramms aufbaut. Diese Formgestaltung der Schneidplatte lässt sich zwar flexibler einsetzen, jedoch ist zur Realisierung der dort offenbarten Formgebung die Anordnung eines konkav geformten Bereiches zwischen zwei konvex gekrümmten Bereichen an einer Schneidkante notwendig. Die konkave Krümmung der Schneidplatte wirkt sich jedoch nachteilig auf deren Festigkeit aus, da sie in einem Bereich vorgesehen ist, an dem sich durch die konkave Krümmung eine Art Sollbruchstelle aufgrund der dort wirkenden hohen lokalen Materialspannungen ergibt.

Der Erfindung liegt die Aufgabe zugrunde, eine Schneidplatte anzugeben, die aufgrund ihrer Form flexibel einsetzbar ist und gleichzeitig eine hohe Haltbarkeit aufweist.

Gelöst wird die Aufgabe durch eine Schneidplatte mit den Merkmalen des Anspruchs 1. Vorteilhafte Ausführungsformen finden sich in den Unteransprüchen.

Erfindungsgemäß ist eine Form der Schneidplatte vorgesehen, die von der Grundform eines Parallelogramms abgeleitet ist. Dabei erstrecken sich zwei gerade Schneidkanten entlang der Längsseiten des Parallelogramms, welches der Form der Schneidplatte zugrundeliegt. An die geraden Schneidkanten schließen sich im Bereich der spitzen Winkel des der Form der Schneidplatte zugrundeliegenden Parallelogramms Radiusschneidkanten an. Diese Radiusschneidkanten gehen im Bereich der Querseiten des zugrundeliegenden Parallelogramms in konvex gewölbte Schneidkanten über, wobei der Krümmungsradius der konvex gewölbten Schneidkanten größer gewählt ist als der Krümmungsradius der Radiusschneidkanten. Erfindungswesentlich ist hierbei, dass der Übergangsbereich der Schneidkante gerade oder konvex gekrümmt ausgeführt ist. Unter einem spitzen Winkel ist dabei gemäß der gängigen mathematischen Definition ein Winkel der kleiner ist als 90° zu verstehen.

Dabei findet der Übergang von der Radiusschneidkante in die konvex gewölbte Schneidkante in einem Übergangsbereich statt, der sich im Bereich der Querseiten des zugrundeliegenden Parallelogramms befindet und an den an jedem Punkt eine Tangente angelegt werden kann, welche die Form der Schneidplatte nicht schneidet. Dabei schneiden sich die Tangenten in den Übergangsbereichen mit den Verlängerungen der geraden Schneidkanten derart, dass sie den spitzen Winkel des der Form der Wendeschneidplatte zugrundeliegenden Parallelogramms bilden, wobei sich der spitze Winkel im Bereich der Radiusschneidkanten befindet.

Vorteilhafterweise schließen sich an die konvexen Krümmungen der Schneidkante Eckbereiche an, die den Übergang zwischen den konvex gewölbten Schneidkanten und den geraden Schneidkanten im Bereich der stumpfen Winkel des der Form der Schneidplatte zugrundeliegenden Parallelogramms darstellen. Die Eckbereiche müssen dabei nicht zwingend als scharfkantige Ecken ausgeführt sein, es kann ebenso eine Verrundung der Eckbereiche vorgesehen werden. In diesem Fall ist die Krümmung der verrundeten Eckbereiche vorzugsweise derart ausgeführt, dass sich im Eckbereich ein kleinerer Krümmungsradius ergibt als im Bereich der konvex gekrümmten Schneidkanten. Unter einem stumpfen Winkel ist dabei gemäß der gängigen mathematischen Definition ein Winkel der größer ist als 90° zu verstehen.

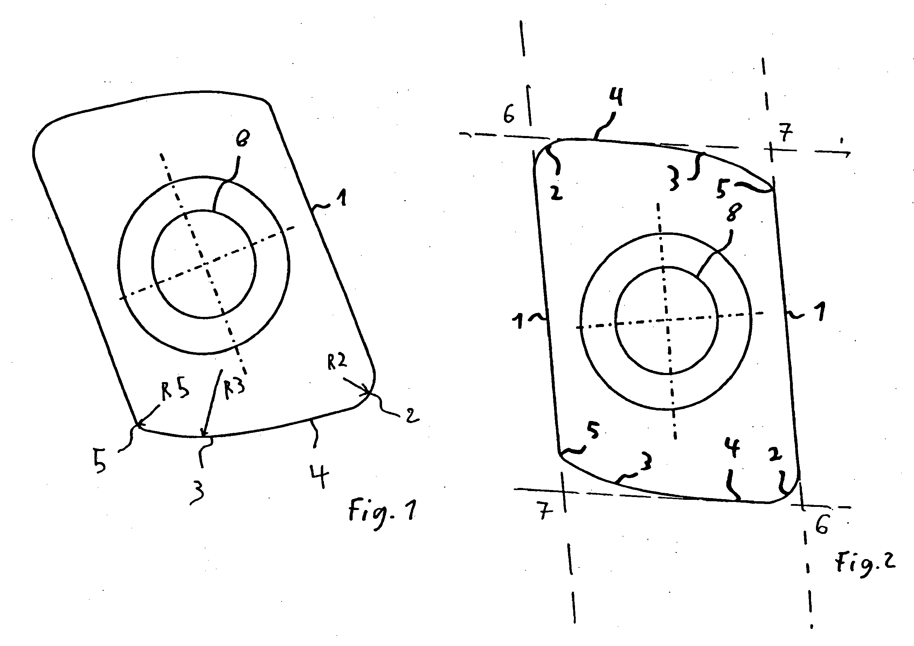

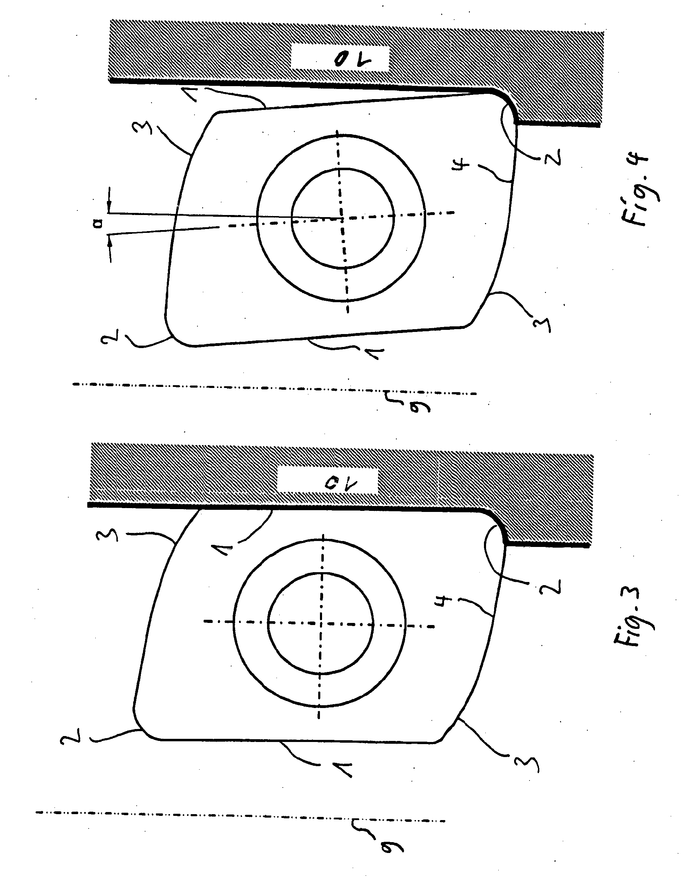

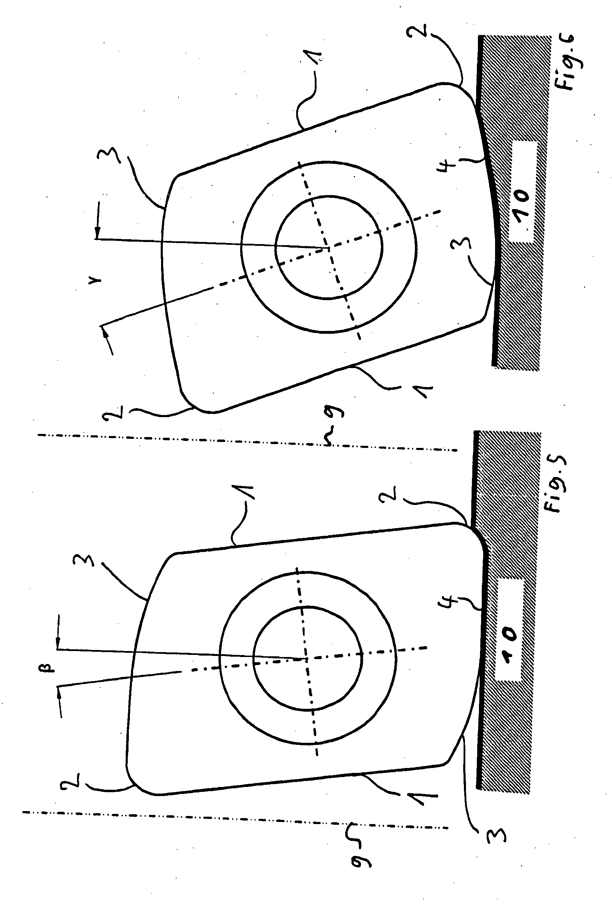

Die Erfindung wird im Folgenden anhand der Figuren 1 bis 6 näher erläutert.
Figur 1 zeigt eine beispielhafte erfindungsgemäße Schneidplatte.
Figur 2 zeigt schematisch eine beispielhafte erfindungsgemäße Schneidplatte und das der Form der Schneidplatte zugrundeliegende Parallelogramm.
Figur 3 zeigt schematisch eine beispielhafte erfindungsgemäße Schneidplatte im Eingriff an einem Werkstück beim 90°-Eckfräsen.
Figur 4 zeigt schematisch eine beispielhafte erfindungsgemäße Schneidplatte im Eingriff bei einem Werkstück beim 0° - 90°-Kopierfräsen.
Figur 5 zeigt schematisch eine beispielhafte erfindungsgemäße Schneidplatte im Eingriff an einem Werkstück beim Breitschlichten mit Planfase.
Figur 6 zeigt schematisch eine beispielhafte erfindungsgemäße Schneidplatte im Eingriff an einem Werkstück beim Hochvorschubfräsen.

Die beispielhafte erfindungsgemäße Schneidplatte weist zwei gerade Schneidkanten 1 auf, an die sich die Radiusschneidkanten 2 anschließen, die den Krümmungsradius R2 aufweisen. Die Radiusschneidkanten 2 gehen in einem Übergangsbereich 4 in die konvex gewölbten Schneidkanten 3 über, die einen Krümmungsradius R3 aufweisen, wobei der Krümmungsradius R3 der konvex gewölbten Schneidkanten 3 größer ist als der Krümmungsradius R2 der Radiusschneidkanten 2. Vorteilhafterweise weist die Schneidplatte eine Aufnahme 8 auf, mit der sie durch eine geeignete Halterung lösbar am Werkzeug befestigt wird, wobei die Aufnahme am Werkzeug derart gestaltet ist, dass es möglich ist, den Anstellwinkel der Schneidplatte im Hinblick auf das gewünschte Bearbeitungsverfahren zu variieren.

Durch die der Schneidplatte zugrundeliegende Parallelogrammform ergibt sich notwendigerweise ein Eckbereich, in dem sich an die konvex gewölbte Schneidkante 3 wiederum eine gerade Schneidkante 1 anschließt. Dieser Eckbereich 5 kann dabei abgerundet gestaltet sein, wobei der Krümmungsradius R5, der dem Eckbereich zugeordnet werden kann, vorzugsweise wesentlich kleiner ist als der Krümmungsradius R3 der konvex gewölbten Schneidkante 3.

Das Verhältnis der Form der Schneidplatte zu dem der Form der Schneidplatte zugrundeliegenden Parallelogramm gestaltet sich derart, dass die Radiusschneidkanten 2 im Bereich der spitzwinkligen Ecken 6 des Parallelogramms liegen und die Eckbereiche 5 im Bereich der stumpfwinkligen Ecken 7 des Parallelogramms. Die geraden Schneidkanten 1 stellen die vorzugsweise längeren Längsseiten des Parallelogramms dar, während der Übergangsbereich 4 sowie die konvex gewölbte Schneidkante 3 im Bereich der Querseiten des Parallelogramms liegen.

Mit einer solchen erfindungsgemäßen Schneidplatte ist es möglich, den Vorgang des 90°-Eckfräsens durchzuführen, wobei die scharfen Schneidkanten 1 parallel zur Werkzeugachse 9 angestellt sind. Dabei kommt die Schneidplatte mit der Radiusschneidkante 2 und der geraden Schneidkante 1 in Eingriff mit dem Werkstück 10. Die Vorschubrichtung ist dabei parallel zur Werkzeugachse 9 gewählt, wobei die Vorschubbewegung in die Richtung der am Werkstück 10 angreifenden Radiusschneidkante 2 gerichtet ist.

Ebenfalls ist es mit der beispielhaften erfindungsgemäßen Schneidplatte möglich, den Vorgang des 0° - 90°-Kopierfräsens durchzuführen. Bei diesem Verfahren kommt im Wesentlichen nur die Radiusschneidkante 2 am Werkstück 10 zum Angriff. Abhängig von der Lage und der gewünschten Geometrie des Werkstücks 10, die durch die Bearbeitung erreicht werden soll, kann hierbei die Schneidplatte in einem Anstellwinkel α zur Werkzeugachse angestellt werden, welcher dem Winkel zwischen der Werkzeugachse 9 und den geraden Schneidkanten 1 entspricht.

Durch die Geometrie der sich im Bereich der Querseite des der Form zugrundeliegenden Parallelogramms befindenden Schneidkante ist es mit der beispielhaften erfindungsgemäßen Schneidplatte ebenfalls möglich, das Breitschlichten mit der Planfase durchzuführen. Das Werkzeug greift dabei in Richtung der Werkzeugachse 9 am Werkstück 10 an, so dass sich die Vorschubrichtung im rechten Winkel zur Werkzeugachse 9 orientiert. Dabei wird ein Anstellwinkel β gewählt, durch den sich im Wesentlichen der Übergangsbereich 4 der Schneidkante im Eingriff mit dem Werkstück befindet, sowie ein Teilbereich der Radiusschneidkante 2, in dessen Richtung die Vorschubbewegung geführt wird. Vorzugsweise ist dabei wenigstens ein Teil des Übergangsbereichs 4 gerade ausgeführt, so dass sich beim Schlichten durch die Drehbewegung der Schneidplatte um die Werkzeugachse 9 ein flächiger Angriff der Schneidplatte am Werkstück 10 durch den Übergangsbereich 4 ergibt.

Um beim Hochvorschubfräsen hohe Vorschubgeschwindigkeiten erzielen zu können, kann die erfindungsgemäße beispielhafte Schneidplatte um einen Winkel y, der größer ist als der Winkel β, zur Werkzeugachse 9 angestellt werden. Dies hat zur Folge, dass sich bei einer ansonsten zum Breitschlichten analogen Werkzeugposition nun der Übergangsbereich 4 und die konvex gewölbte Schneidkante 3 in Eingriff am Werkstück 10 befinden, während die Radiusschneidkante 2 nicht oder nur in ihrem Randbereich mit dem Werkstück 10 in Berührung kommt. Dadurch wird verhindert, dass die bei rohen Vorschüben entstehenden Kräfte auf die aufgrund ihres Krümmungsradius R2 empfindliche Radiusschneidkante 2 einwirken.

## Patentansprüche

1. Schneidplatte für einen Fingerfräser zur maschinellen Fräsung, deren Form von der Grundform eines Parallelogramms abgeleitet ist, die zwei gerade Schneidkanten (1), welche sich entlang der Längsseiten des der Form d er Schneidplatte zugrundeliegenden Parallelogramms erstrecken, aufweist, wobei sich an die geraden Schneidkanten (1) im Bereich der spitzen Winkel (6) des zugrundeliegenden Parallelogramms Radiusschneidkanten (2) anschließen, welche in einem Übergangsbereich (4) im Bereich der Querseiten des der Form der Schneidplatte zugrundeliegenden Parallelogramms in konvex gewölbte Schneidkanten (3) übergehen, wobei der Krümmungsradius (R3) der konvex gewölbten Schneidkanten (3) größer ist als der Krümmungsradius (R2) der Radiusschneidkante (2),
**dadurch gekennzeichnet,**
**dass** der Übergangsbereich gerade oder konvex gekrümmt ist.

2. Schneidplatte nach Anspruch 1,
**dadurch gekennzeichnet,**
**dass** die Tangenten in den Übergangsbereichen (4) mit den Verlängerungen der geraden Schneidkanten (1) den spitzen Winkel (6) des der Form der Schneidplatte zugrunde liegenden Parallelogramms im Bereich der Radiusschneidkanten bilden.

3. Schneidplatte nach Anspruch 1 oder 2,
**dadurch gekennzeichnet,**
**dass** sich an die konvexen Krümmungen (3) Eckbereiche (5) anschließen, die den Übergang zwischen den konvex gewölbten Schneidkanten (3) und den geraden Schneidkanten (1) im Bereich der stumpfen Winkel (7) des der Form der Schneidplatte zugrundeliegenden Parallelogramms darstellen.

4. Schneidplatte nach Anspruch 3,
**dadurch gekennzeichnet,**
**dass** die Eckbereiche (5) eine Krümmung mit einem kleineren Krümmungsradius (R5) als dem Krümmungsradius (R3) der konvex gewölbten Schneidkanten aufweisen.

## Claims

1. Cutting plate for a finger miller for machine milling, the shape of which cutting plate is derived from the basic shape of a parallelogram, the cutting plate having two straight cutting edges (1) extending along the longitudinal sides of the parallelogram forming the basis for the shape of the cutting plate, wherein radius cutting edges (2) connect to the straight cutting edges (1) in the region of the acute angle (6) of the basic parallelogram, which radius cutting edges (2) transform in a transition region (4) in the region of the transverse sides of the parallelogram forming the basis for the shape of the cutting plate into convexly curved cutting edges (3), wherein the radius of curvature (R3) of the convexly curved cutting edges (3) is greater than the radius of curvature (R2) of the radius cutting edge (2),
**characterised in that**
the transition region is straight or convexly curved.

2. Cutting plate according to claim 1,
**characterised in that**
the tangents in the transition regions (4) form, with the extensions of the straight cutting edges (1), the acute angle (6) of the parallelogram forming the basis for the shape of the cutting plate in the region of the radius cutting edges.

3. Cutting plate according to claim 1 or 2,
**characterised in that**
corner regions (5) connect to the convex curvatures (3), said corner regions constituting the transition between the convexly curved cutting edges (3) and the straight cutting edges (1) in the region of the obtuse angle (7) of the parallelogram forming the basis for the shape of the cutting plate.

4. Cutting plate according to claim 3,
**characterised in that**
the corner regions (5) have a curvature with a smaller radius of curvature (R5) than the radius of curvature (R3) of the convexly curved cutting edges.

## Revendications

1. Plaquette de coupe pour une fraise en bout pour fraisage mécanique, dont la forme est dérivée de la forme de base d'un parallélogramme et qui présente deux arrêtes de coupe droites (1) qui s'étendent le long des côtés longitudinaux du parallélogramme servant de base à la forme de la plaquette de coupe, sachant que, dans la région des angles aigus (6) du parallélogramme servant de base, se raccordent aux arrêtes de coupe droites (1) des arrêtes de coupe suivant un rayon (2) qui, dans une zone de transition (4), dans la région des côtés transversaux du parallélogramme servant de base à la forme de la plaquette de coupe, passent à des arrêtes de coupe convexes (3), sachant que le rayon de courbure (R3) des arrêtes de coupe convexes (3) est plus grand que le rayon de courbure (R2) des arrêtes de coupe suivant un rayon (2),
**caractérisée en ce que**
la zone de transition est droite ou convexe.

2. Plaquette de coupe selon la revendication 1,
**caractérisée en ce que**,
dans les zones de transition (4), les tangentes forment, avec les prolongements des arrêtes de coupe droites (1), l'angle aigu (6) du parallélogramme servant de base à la forme de la plaque de coupe, dans la région des arrêtes de coupe suivant un rayon.

3. Plaquette de coupe selon revendication 1 ou 2,
**caractérisée en ce que**
se raccordent aux courbes convexes (3) des zones angulaires (5) qui représentent la transition entre les arrêtes de coupe convexes (3) et les arrêtes de coupe droites (1) dans la région de l'angle obtus (7) du parallélogramme servant de base à la forme de la plaquette de coupe.

4. Plaquette de coupe selon la revendication 3,
**caractérisée en ce que**
les zones angulaires (5) présentent une courbure dont le rayon de courbure (R5) est plus petit que le rayon de courbure (R3) des arrêtes de coupe convexes.
